# EUROPEAN PATENT SPECIFICATION

(11) **EP 2 953 060 B1**
(45) Date of publication and mention of the grant of the patent: **17.10.2018**
(21) Application number: 13873240.9
(22) Date of filing: 07.05.2013
(51) Int. Cl.: G06K 19/077, G06K 19/07, H01Q 1/22, B26F 1/38, B65H 37/04, H01Q 23/00, B65H 37/00

(54) **METHOD AND APPARATUS FOR MANUFACTURING DISCRETE ANTENNA RFID TAGS**
VERFAHREN UND VORRICHTUNG ZUR HERSTELLUNG VON EINZELNEN ANTENNEN-RFID-ETIKETTEN
PROCÉDÉ ET APPAREIL PERMETTANT DE FABRIQUER DES ÉTIQUETTES RFID D'ANTENNE DISCRÈTES

(30) Priority: 29.01.2013 CN 201310033460
(43) Date of publication of application: 09.12.2015
(73) Proprietor: Shenzhen Hyan Microelectronics Co., Ltd., Shenzhen Guangdong 518108 (CN)
(72) Inventor: TENG, Yujie, Shenzhen Guangdong 518108 (CN); ZHANG, Shifan, Shenzhen Guangdong 518108 (CN); TENG, Yudong, Shenzhen Guangdong 518108 (CN)
(74) Representative: Hellmich, Wolfgang
(86) International application number: PCT/CN2013/075232
(87) International publication number: WO 2014/117448

(56) References cited:
- EP-A1- 2 275 978
- CN-A- 101 609 926
- CN-A- 101 844 421
- CN-U- 203 217 604
- US-A1- 2005 183 264

## Description

### FIELD OF THE INVENTION

The present invention relates to the manufacturing technology of electronic tags, in particular to a method for manufacturing a split antenna RFID tag and an apparatus for implementing the method.

### BACKGROUND OF THE INVENTION

At present, a majority of apparatuses for manufacturing RFID employ a synchronization technology. That is, based on the size and spacing of consumer's tags, the spacing between antennas is kept the same as the spacing between the consumer's tags. Even if multiple apparatuses are used in linkage, various working procedures such as pasting, die cutting and aligned combining are performed synchronously and at a same speed due to an equal spacing.

During the manufacturing of antennas by etching copper/aluminum foil or die cutting copper/aluminum foil, in order to meet the requirement of equal spacing between tags, a distance between antennas is very large and most of raw materials are etched or discharged, so that a great waste of raw materials is caused. As the spacing between the antennas is very large, a lot of vacant spaces are left. The efficiency loss is also considerable during production on a pasting machine.

The process of the present invention is to realize the low-cost manufacturing of split tags by really reducing the manufacturing cost of materials in each link and improving the production efficiency of each link, thus to benefit consumers and expand the application range. Document EP 2 275 978 A1 discloses a method and an apparatus for making composite webs of record members each containing at least two circuits. The circuits can be contained in webs having different pitches.

### SUMMARY OF THE INVENTION

To avoid the deficiencies of the prior art, the present invention provides a method for manufacturing a split antenna RFID tag and an all-in-one machine for implementing the method. The all-in-one machine is provided with multiple conveying mechanisms which are controlled by a main control unit, and may complete multiple times of operations of combining, die cutting, waste discharging, and secondary asynchronous aligning, transferring and labeling, thereby automatically producing different types of split tag products in batches.

The present invention provides a method for manufacturing a split antenna RFID tag, including the following steps of:
S1: driving, by a first conveying mechanism, the conveying of a carrier tape 500' adhered with aluminum foil 500 at a speed V1, wherein the first conveying mechanism includes a shaft roller set 1, a drive shaft 21, a circular antenna die cutter 22 disposed on an upper side of the drive shaft 21, a drive shaft 51 and a circular PET film die cutter 52 disposed on an upper side of the drive shaft 51;
   letting an adhesive tape 510 from a second conveying mechanism enter the shaft roller set 1 to combine with the carrier tape 500' adhered with the aluminum foil, and cutting by the circular antenna die cutter 22 to form aluminum foil antennas 501 on the carrier tape 500', wherein the wasted aluminum foil portions are pulled out along with the adhesive tape;
S2: driving, by a shaft roller set 3 and a shaft roller set 4 in a third conveying mechanism, the conveying of a base tape 502' with several RFID units 502 at a variable speed within a certain period, separating the RFID units from the base tape 502' when passing through a first flat scraper 8 in front of the shaft roller set 4, and pasting the RFID units onto the corresponding aluminum foil antennas 501 on the carrier tape 500' to form tag modules 503; and
S3: cutting, by the circular PET film die cutter 52, a PET film 511 with back glue from a fourth conveying mechanism under the drive of the drive shaft 51 to form PET films 504, and covering the PET films on the corresponding tag modules 503 on the carrier tape 500' to form semi-finished products 505.

The method further includes a step S4 of synchronously pasting a piece of surface liner: driving, by a shaft roller set 6 and a drive shaft 71 in a fifth conveying mechanism, the conveying of a product release liner tape 513 to convey at a speed V3, separating the semi-finished products 505 when the carrier tape 500' passes through a second flat scraper in front of a steering shaft P2, and pasting the semi-finished products 505 onto the product release liner tape 513, wherein a circular die cutter 72 is provided on an upper side of the drive shaft 71; and
letting a surface liner tape 52 with back glue enter the shaft roller set 6 to combine with the product release liner tape 513 adhered with the semi-finished products 505, and cutting the surface liner 506 by the circular die cutter 72 to form products 507.

The period T2 of movement of the base tape 502' carried with several RFID units satisfies the following equation: T2 = L1/V1, where L1 is a skip distance between adjacent aluminum foil antennas 501 on the carrier tape 500'; T2 is divided into a rapid movement time T21, a waiting time T22 and a pasting time T23; within T21, the base tape 502' moves at a speed V21 to allow an RFID unit to be pasted to rapidly reach an RFID unit waiting site; within T22, the base tape 502' does not move, and instead waits for a paste instruction; when a next aluminum foil antenna 501 to be pasted reaches a to-be-pasted antenna site, a main control unit sends a paste instruction; within T23, the base tape 502' and the carrier tape 500' move at the same speed V1, so that the RFID unit to be pasted, currently in the RFID unit waiting site, is separated and pasted onto the aluminum foil antenna 501 to be pasted on the carrier tape 500'.

The RFID unit waiting site is a position where a lower edge of the RFID unit 502 to be pasted is flush with a right edge of the first flat scraper 8. The to-be-pasted antenna site is a position where an upper edge of the RFID unit 502 to be pasted, currently in the RFID unit waiting site, is flush with an upper edge of the aluminum foil antenna 501 to be pasted.

The carrier tape 500' is a release tape such as a release PET tape, and the base tape 502' is a release tape such as a release liner tape.

Each of the aluminum foil antennas 501 includes a folded dipole. Two open ends of the folded dipole are connected with fold line portions, respectively. A pair of fold line coupling portions extends downward from the middle of an upper transverse portion of the folded dipole. The aluminum foil antennas 501 may also be designed as other shapes with a folded dipole.

Each of the RFID units 502 includes a base film, a radiating antenna disposed on the base film and a radio frequency IC. The radio frequency ID is connected to an opening of the radiating antenna. The RFID units are pasted onto the pair of fold line coupling portions of the aluminum foil antennas 501.

An all-in-one machine for implementing the method for manufacturing a split antenna RFID tag is provided, including a rack, a main control unit, and first, second and third conveying mechanisms, wherein:
the first conveying mechanism includes: an unreeling device 101, a reeling device 109, a shaft roller set 1 having a rubber roller 12 and a drive shaft 11, a drive shaft 21, a circular antenna die cutter 22 disposed on an upper side of the drive shaft 21, a drive shaft 51, and a circular PET film die cutter 52 disposed on an upper side of the drive shaft 51, the first conveying mechanism being configured to convey a carrier tape 500' adhered with aluminum foil and form aluminum foil antennas 501 on the carrier tape 500' by cutting by the circular antenna die cutter 22;
the second conveying mechanism having an unreeling means 102 and a reeling means 103 is configured to convey an adhesive tape 510 along with which wasted aluminum foil portions, caused by die cutting the aluminum foil antennas 501, may be discharged;
the third conveying mechanism includes: an unreeling unit 105, a reeling unit 104, a shaft roller set 3 having two rubber rollers 33, 32 and a drive shaft 31, a shaft roller set 4 having two rubber press rollers 43, 42 and a drive shaft 41, and a first flat scraper in front of the shaft roller set 4, the drive shaft 31 and the drive shaft 41 being successively disposed between the drive shaft 21 and the drive shaft 51, the third conveying mechanism being configured to convey a base tape 502' carried with several RFID units 502, the first flat scraper allowing the RFID units 502 to separate from the base tape 502' and then to be pasted onto the corresponding aluminum foil antennas 501 on the carrier tape 500'; and
the drive shaft 11, the drive shaft 21, the drive shaft 51, the drive shaft 31 and the drive shaft 41 are equipped with electromagnetic inductors for speed measurement, and each drive shaft is controlled respectively by a motor; and the electromagnetic inductors are each connected to a corresponding input end of the main control unit via an interface circuit, to be monitored, speed regulated and synchronization rectified by the main control unit.

The all-in-one machine may further include a fourth conveying mechanism, the fourth conveying mechanism including an unreeling unit 106, reeling units 107, 108, the circular PET film die cutter 52 and the drive shaft 51; the conveyed PET film 511 with back glue is cut by the circular PET film die cutter 52 to form PET films 504; and the PET films are covered on the corresponding tag modules 503 on the carrier tape 500' to form semi-finished products 505.

The all-in-one machine may further include a fifth conveying mechanism and a sixth conveying mechanism; the fifth conveying mechanism includes a shaft roller set 6, a drive shaft 71, a circular die cutter 72 disposed on an upper side of the drive shaft 71, an unreeling unit 121 and a reeling unit 125; the fifth conveying mechanism is configured to drive the conveying of a product release liner tape 513, separate the semi-finished products 505 when the carrier tape 500' passes through a second flat scraper 9 in front of the steering shaft P2, and past the semi-finished products onto the product release liner tape 513; and the sixth conveying mechanism includes an unreeling unit 122 and reeling units 123, 124, and is configured to convey a surface liner tape 512 with back glue into the shaft roller set 6 to combine with the product release liner tape 513 of the semi-finished products 505, and to cut the surface liner tape by the circular die cutter 72 to form products 507.

The process of the present invention realizes, by the first and third conveying mechanisms, the primary asynchronous transfer of the RFID units on the release liner tape to the corresponding aluminum foil antennas on the release PET tape, by the first and fifth conveying mechanisms, the secondary asynchronous transfer of the tag modules pasted with the PET films to the product release liner tape, and further by the sixth conveying mechanism, the combining and cutting of the surface liner tape by a user. The secondary asynchronous transferring and labeling makes the arrangement of raw materials and semi-products densest and the amount of waste discharged least, reduces the loss of materials, and realizes the high production efficiency.

The manufacturing of dense RFID units may greatly shorten the running distance of a pasting machine, fully develop the highest production efficiency of the all-in-one machine, reduce the investment of high-precision equipment, and actually reduce the core manufacturing cost of tags.

The aluminum foil antennas, continuously die cut on the release PET tape, may also be arranged densely, so that the manufacturing cost of antennas is reduced.

The all-in-one machine may realize the online die cutting and forming of aluminum antennas (also referred to as coupling antennas), PET protective films and consumer's printed surface liners, the primary asynchronous transferring and pasting of RFID units onto the aluminum foil antennas, the secondary asynchronous transferring of tag modules pasted with the PET films onto the product release liner tape, and the combining of the consumer's printed surface liners. Split tags that meet different requirements of consumers may be continuously and rapidly produced, just by providing reeled release PET tapes adhered with aluminum foil, release liner tapes carried with RFID units, and printed surface liners as required by consumers.

The all-in-one machine may realize the above process and derived processes and have a wide range of application, and may produce different types of products, for example, split tags of a standard size, split tags of a random size, wet and dry inlays with a random spacing, combined tags with both sides die cut, continuous cards or a single card with both sides printed and aligned, etc.

### BRIEF DESCRIPTION OF THE DRAWINGS

Fig. 1 is a structural diagram of conveying, die cutting, and transferring and pasting portions of an all-in-one machine for producing a split antenna RFID tag;
Fig. 2 is a composition and pasting diagram of an embodiment of a split antenna RFID tag;
Fig. 3 is an enlarged view of an RFID unit in an embodiment of Fig. 2;
Fig. 4 is an enlarged view of an aluminum foil antenna in the embodiment of Fig. 2;
Figs. 5 (a) and (b) are diagrams of arrangement of aluminum foil antennas and RFID units of Fig. 2 on a corresponding carrier tape or base tape, respectively;
Figs. 6 (a) and (b) are diagrams of arrangement of tag modules and semi-finished products of Fig. 2 on the carrier tape, respectively;
Figs. 7 (a) and (b) are a front view and a side view of the arrangement of finished products of Fig. 2 on a release liner tape, respectively;
Fig. 8 is a partially enlarged view of portion G of Fig. 7(b); and
Fig. 9 is an exploded diagram of asynchronous labeling of RFID units.

### DETAILED DESCRIPTION OF THE PREFERRED EMBODIMENTS

The present invention will be described below in detail referring to the embodiments of both the split antenna RFID tags and an apparatus.

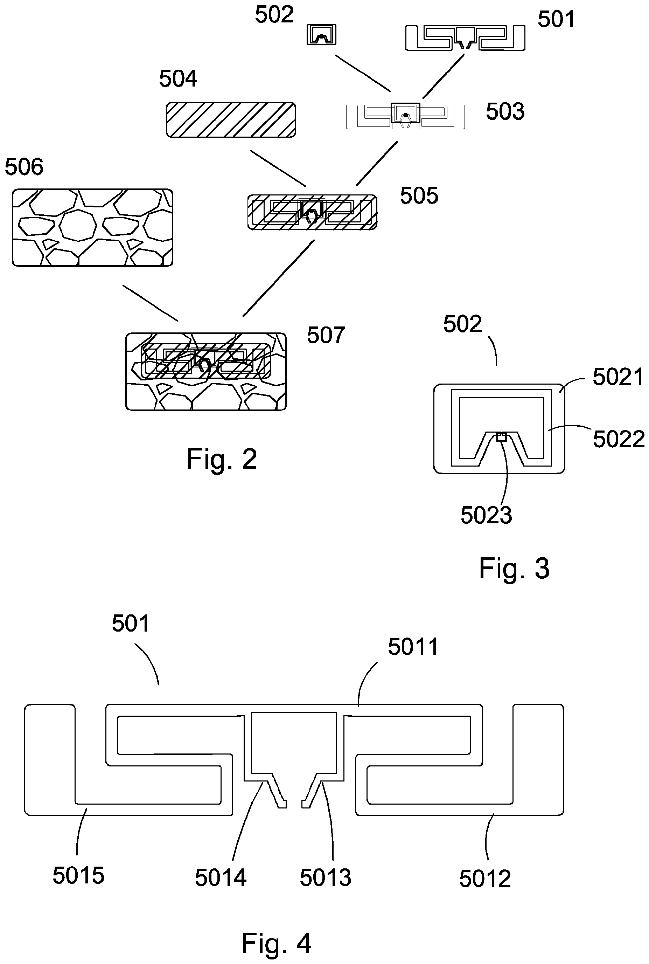

An embodiment of a split antenna RFID tag in Fig. 2 mainly includes four portions: a die cut aluminum foil antenna 501, an RFID unit 502, a PET film 504 and a surface liner 506, which are successively stacked from bottom to top to form a split antenna RFID tag.

As shown in Fig. 3, the RFID unit 502 includes a base film 5021, a radiating antenna 5022 printed on the base film and a radio frequency IC 5023. The radiating antenna 5022 is square as a whole and bent at a lower edge thereof inward to form a concave portion with an opening in the middle, and the radio frequency IC 5023 is connected to the opening. The RFID unit 502 may be manufactured by a conventional process. Back glue is adhered to a base tape 502' at a certain step distance L2, and the base tape 502' is a release tape such as a release liner tape. The radiating antenna 5022 may be in other shapes according to design requirements.

As shown in Fig. 4, the aluminum foil antenna 501 includes a folded dipole 5011. Two open ends of the folded dipole 5011 are connected with fold line portions 2012, 5015, respectively. A pair of fold line coupling portions 2103, 5104 extends downward from the middle of an upper transverse portion of the folded dipole 5011.

The RFID units 502 are pasted onto the pair of fold line coupling portions 2103, 5104 of the aluminum foil antenna 501 to form tag modules 503. The PET film 504 is pasted onto the tag modules 503 to form semi-finished products 505, and the surface liner 506 is pasted with the semi-finished products 505 to form a finished tag product 507. The aluminum antenna 501, the PET film 504 and the surface liner 506 are online die cut and formed by an apparatus of the present invention.

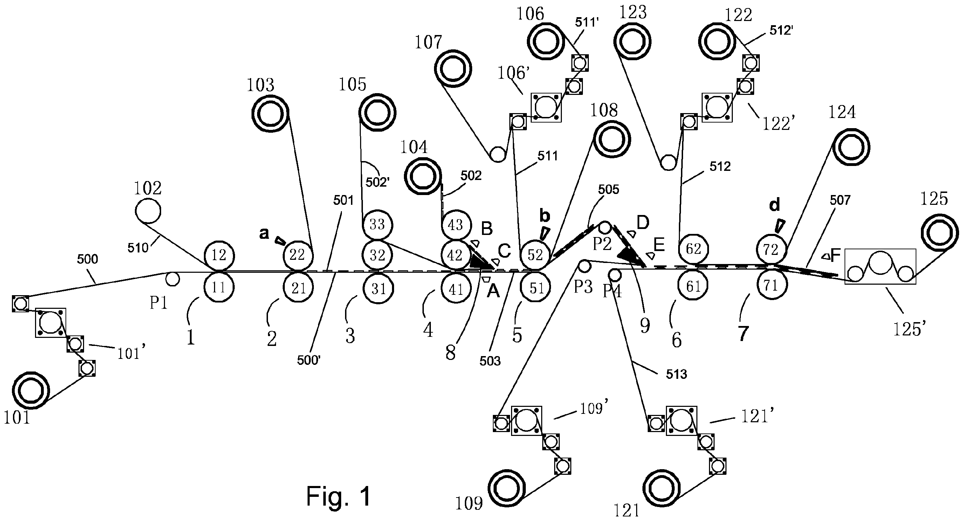

With reference to Fig. 1, a structural diagram of conveying, die cutting, and transferring and pasting portions of an all-in-one machine is shown. Manufacturing a split antenna RFID tag in an embodiment of Fig. 2 includes the following steps.

### 1. Manufacturing of aluminum foil antennas 501

The conveying of a carrier tape 500' adhered with aluminum foil 500 is driven at a speed V1 by a shaft roller set 1, a drive shaft 21 and a drive shaft 51 in a first conveying mechanism; a circular antenna die cutter 22 is disposed on an upper side of the drive shaft 21, and a circular PET film die cutter 52 is disposed on an upper side of the drive shaft 51, wherein the carrier tape 500' adhered with the aluminum foil 500 is a release PET tape.

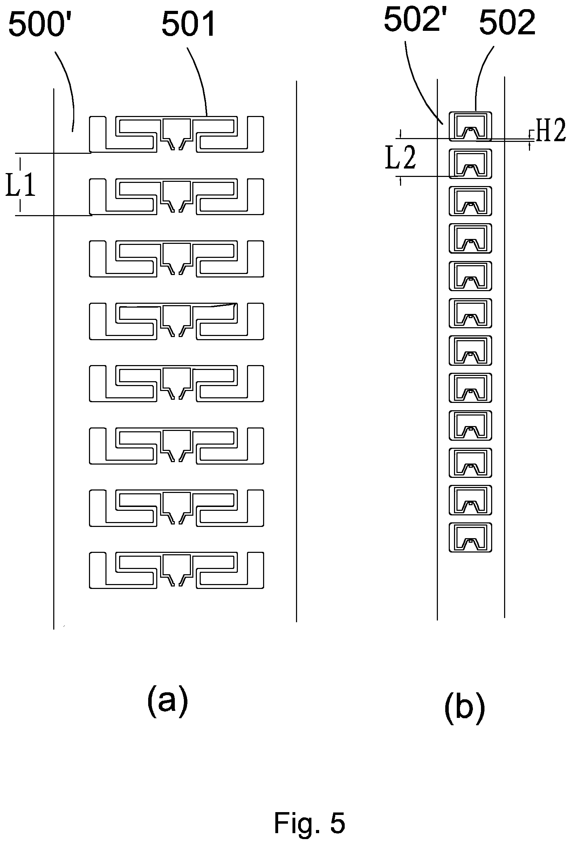

An adhesive tape 510 from a second conveying mechanism enters the shaft roller set 1 to combine with the carrier tape 500' adhered with the aluminum foil 500, and is then die cut by the circular antenna die cutter 22 to form the aluminum foil antennas 501 on the carrier tape 500'. The wasted aluminum foil portions are pulled out along with the adhesive tape. As shown in Fig. 5 (a), several aluminum foil antennas 501 are distributed on the carrier tape 500', with a spacing of 3 mm ± 0.5 mm and a step distance between two aluminum foil antennas 501 of L1 ± 0.5 mm.

### 2. Asynchronous labeling of RFID units 502

The conveying of a base tape 502' with several RFID units 502 is driven at a variable speed within a certain period by a shaft roller set 3 and a shaft roller set 4 in a third conveying mechanism; and the RFID units are separated from the base tape 502' and fall off when passing through a first flat scraper 8 in front of the shaft roller set 4 and are then pasted onto the corresponding aluminum foil antennas 501 on the carrier tape 500' to form tag modules 503.

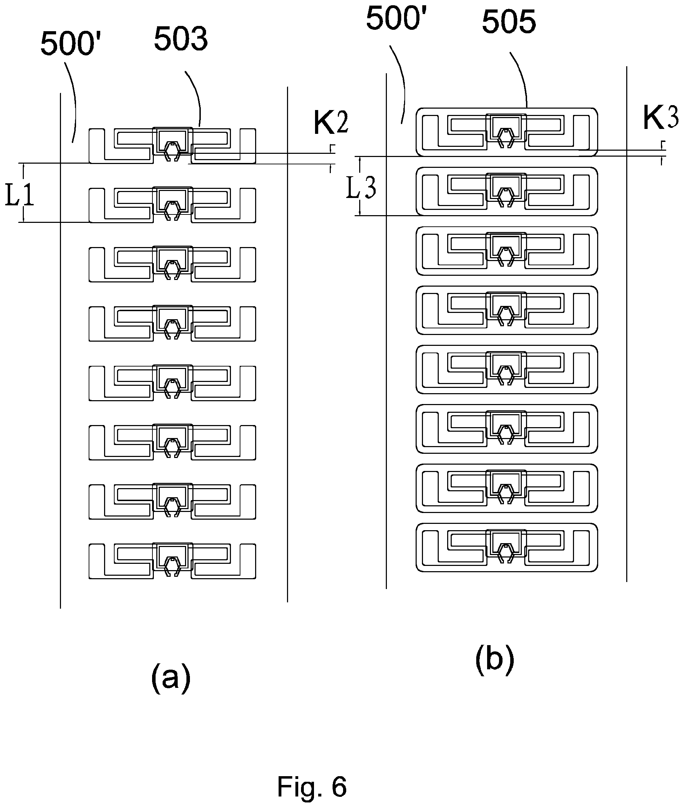

The base tape 502' carried with several RFID units 502 is a release liner tape, as shown in 5(b). The arrangement of the tag modules 503 on the carrier tape 500' is as shown in Fig. 6(b), and the RFID units 502 are pasted onto a pair of fold line coupling portions 2103, 5104 (see Fig. 4) of the corresponding aluminum foil antenna 501.

### 3. Covering with PET films

A PET film 511 with back glue from a fourth conveying mechanism is die cut by the circular PET film die cutter 52 under the drive of the drive shaft 51 to form PET films 504 of a required size, and the PET films are covered on the corresponding tag modules 503 on the carrier tape 500' to form semi-finished products 505. The arrangement of the semi-finished products 505 is as shown in Fig. 6(b).

The semi-finished products 505 may be directly sold as reeled wet inlay products of split tags of a standard size. If the PET film material is replaced by a surface liner, by the same process, the semi-finished products may be directly sold as split tags of a standard size.

For special antennas without a complicated shape, the PET protective film may be omitted as long as the deformation of antennas will not occur during the synchronization.

### 4. Secondary asynchronous transferring of the semi-finished products and synchronous pasting of a surface liner

The conveying of a product release liner tape 513 is driven at a speed V3 by a shaft roller set 6 and a drive shaft 71 in a fifth conveying mechanism; and the semi-finished products 505 are separated and fall off when the carrier tape 500' passes through a second flat scraper 9 in front of a steering shaft P2, and are pasted onto the product release liner tape 513, wherein a circular die cutter 72 is provided on an upper side of the drive shaft 71, and V3 = (1.2 - 5) × V1.

A surface liner tape 52 with back glue enters the shaft roller set 6 to combine with the product release liner tape 513 adhered with the semi-finished products 505, and the surface liner 506 is die cut by the circular die cutter 72 to form products 507. The original release liner of the surface liner tape is recycled by the unreeling unit 123.

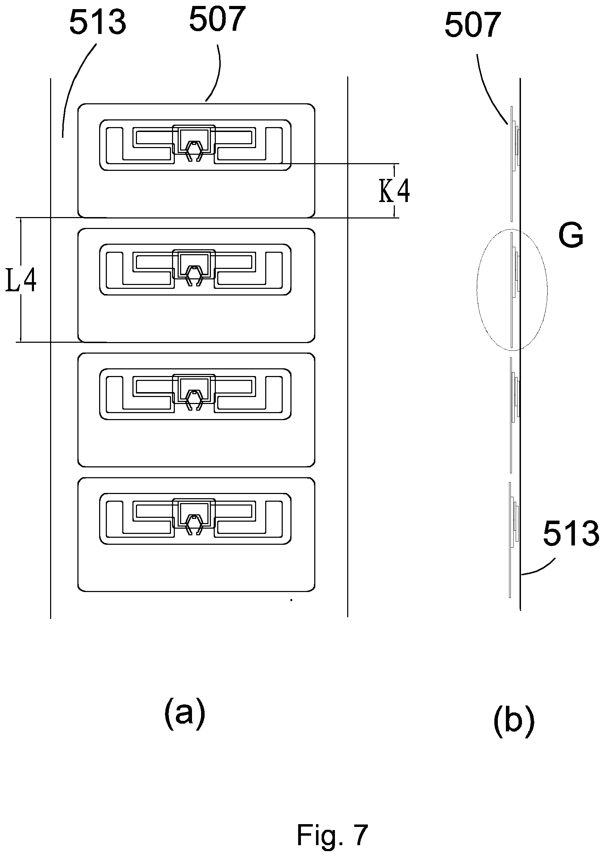

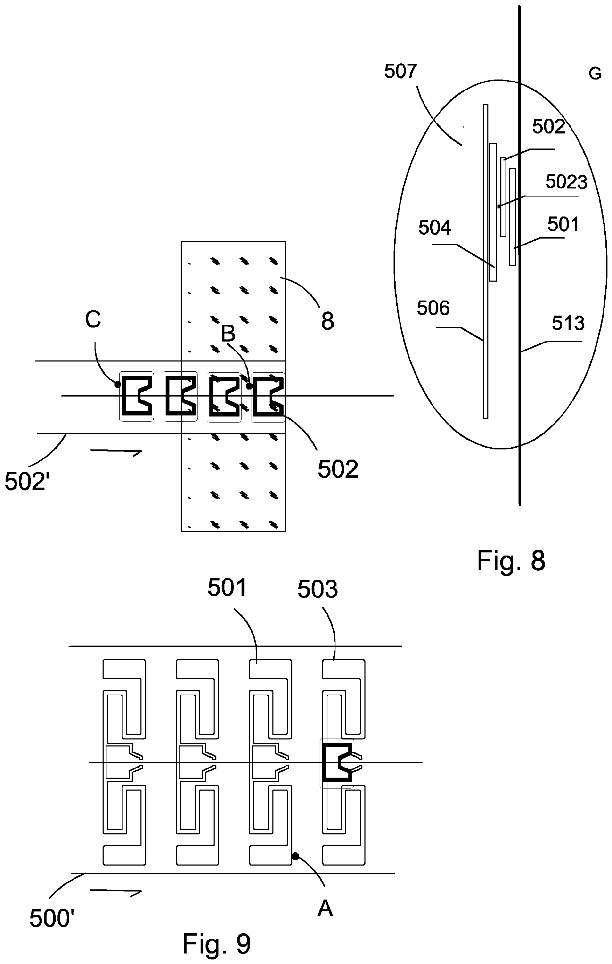

The arrangement of the products 507 on the product release liner tape 513 is as shown in Figs. 7 (a) and (b). A partially enlarged view (Fig. 8) of the products 507 shows a stacked structure of a split antenna RFID tag in the embodiment of Fig. 2, the stacked structure mainly including an aluminum antenna 501, RFID units 502, a PET film 504 and a surface liner 506, wherein the RFID unit 502s are pasted onto a pair of fold line coupling portions of the aluminum antenna 501, the PET film 504 is pasted onto the RFID unit s502, and the surface liner 506 of a large size is pasted onto the PET film 504. The product release liner tape 513 with the products 507 is reeled. When in use, a consumer may tear off the product 507 from the release liner, just like a common tag.

This manufacturing method is implemented by an all-in-one machine for manufacturing a split antenna RFID tag. Referring to Fig. 1, the all-in-one machine mainly includes: a rack, a main control unit, first, second and third conveying mechanism, etc.

The first conveying mechanism includes: an unreeling device 101 equipped with a tension regulator 101', a reeling device 109 equipped with a tension regulator 109', a shaft roller set 1 having a rubber roller 12 and a drive shaft 11, a drive shaft 21, a circular antenna die cutter 22 disposed on an upper side of the drive shaft 21, a drive shaft 51, and a circular PET film die cutter 52 disposed on an upper side of the drive shaft 51. A guide shaft P1 is provided on a left side of the drive shaft 11, and guide shafts P2, P3 are provided on a right side of the drive shaft 51. The second conveying transmission includes an unreeling means 102 and a reeling means 103, for conveying an adhesive tape 510 along with which wasted aluminum foil portions may be discharged.

The modulus of the circular antenna die cutter 22 depends upon the size of products. The die spacing A1 is 3 mm to 5 mm, which facilitates the subsequent asynchronous transferring. The die cutter may be designed as a single cutter, double cutters or multiple cutters, depending upon the complexity of shape of antennas and the waste discharge performance. The aluminum foil antennas 501 are formed by synchronously cutting in multiple cutter holders under the premise of an equal spacing.

The aluminum foil 500 on the carrier tape 500' has a thickness ranging from 0.015 mm to 0.050 mm, depending upon the width of products, and is placed on the unreeling device 101 in a reeled manner. The other end of the carrier tape 500' is reeled by the reeling device 109.

The first conveying mechanism is configured to support and convey the carrier tape 500' adhered with the aluminum foil 500. The aluminum foil 500 is die cut by the circular antenna die cutter 22 to form aluminum foil antennas 501 on the carrier tape 500'. The wasted aluminum foil portions, beyond the profile of the aluminum foil antennas 501, are pulled out by the reeling means 103 along with the adhesive tape 510.

The third conveying mechanism includes: a reeling unit 105, a feeding unit 104, a shaft roller set 3 having two rubber rollers 33, 32 and a drive shaft 31, a shaft roller set 4 having two rubber press rollers 43, 42 and a drive shaft 41, and a first flat scraper 8 in front of the shaft roller set 4, the drive shaft 31 and the drive shaft 41 being successively disposed between the drive shaft 21 and the drive shaft 51, the third conveying mechanism being configured to support and convey a base tape 502' carried with several RFID units 502. The first flat scraper 8 allows, with the assistance with photoelectric sensors A, B and C, the RFID units to separate from and fall off the release liner tape and then to be pasted onto the corresponding aluminum foil antennas 501 on the carrier tape 500' to form tag modules 503.

The drive shaft 11, the drive shaft 21, the drive shaft 51, the drive shaft 31 and the drive shaft 41 are equipped with electromagnetic inductors for speed measurement, and each drive shaft is controlled respectively by a motor; and the electromagnetic inductors are each connected to a corresponding input end of the main control unit via an interface circuit, to be monitored, speed regulated and synchronization rectified by the main control unit. The main control unit may be PLC or PC.

The asynchronous labeling of the RFID units 502 is accomplished by the first and third conveying mechanisms and the photoelectric sensors A, B and C (may be optical fiber sensors or CCD image sensors), under the control of the main control unit. The initial position of the photoelectric sensors may be adjusted and fixed according to the process requirements, and corresponding parameters are set in software. The main control unit receives signals from the photoelectric sensors, and the software makes decision and correspondingly processes to accurately control the motion of the motors.

The RFID units 502 with back glue, as shown in Fig. 5 (b), are arranged on the base tape 502' in a single row and placed on the feeding unit 104. The two rubber press rollers 42, 43 need to be provided thereon with evasion grooves for the IC chip. When the base tape 502' passes through the edge of the first flat scrapper 8, RFID units are separated from the release liner and pasted onto the aluminum foil antennas 501 on the carrier tape 500'; and the base tape 502' is reeled by the reeling unit 105 when passing through the rubber rollers 33, 32. There is a gap between the drive shafts 31, 41 and the carrier tape 500' with the aluminum foil antennas 501, so that no influence will be caused to the aluminum foil antennas.

Referring to Figs. 5 (a) and (b), the aluminum foil antennas 501 and the RFID units 502 have a different skip distance (or center distance) on the corresponding carrier tape or base tape. The skip distance L1 of the aluminum foil antennas 501 is greater than the skip distance L2 of the RFID units 502.

Fig. 9 is an exploded diagram of asynchronous labeling of RFID units 502. The lower part of Fig. 9 is the carrier tape 500' when viewed from the top, and the upper part thereof shows a combined part of the base tape 502' located above the carrier tape 500' and the first flat scraper 8 (referring to Fig. 1). The carrier tape 500' runs in a horizontal direction, the base tape 502' runs in a direction towards the right edge of the first flat scrapper 8, and the center lines of the both are in a same vertical plane. A position where the lower edge of the RFID units 502 is flush with the right edge of the first flat scrapper 8 is defined as an RFID unit waiting site, and it is detected by the photoelectric sensor B whether the upper edge of the units reaches the RFID unit waiting site. A position where the upper edge of the RFID units 502 to be pasted, currently in the RFID unit waiting site, is top-bottom aligned with the upper edge of the aluminum foil antennas 501 to be pasted, is defined as a to-be-pasted antenna site, and it is detected by the photoelectric sensor A whether the lower edge of the aluminum foil antennas 501 to be pasted reaches the to-be-pasted antenna site. The photoelectric sensor C identifies information about the position of three or more units in advance, and counts to calculate parameters of the designated units, such as, speed and time of quick motion thereof.

It is assumed that the conveying speed of the carrier tape 500' is V1 and the time interval between the adjacent aluminum foil antennas 501 is T1, T1 = L1/V1. To make the RFID units 502 and the aluminum foil antennas 501 correspond to each other one by one and position them accurately, it is specified that the base tape 502' carried with the RFID units 502 is conveyed at a variable speed within a period T2 (T2 = T1), that is, T1= T2 = T21+ T22+ T23, where T21 is the rapid movement time, T22 is the waiting time, and T3 is the pasting time.

Within T21, the base tape 502' moves at a speed V21 (V21>V1) to allow an RFID unit 502 to be pasted to rapidly reach an RFID unit waiting site; within T22, the base tape 502' does not move, and instead waits for a paste instruction; when a next aluminum foil antenna 501 to be pasted reaches the to-be-pasted antenna site, the photoelectric sensor A sends a front-edge trigger signal and the main control unit sends a paste instruction; within T23, the base tape 502' and the carrier tape 500' move at the same speed V23 = V1, so that the RFID unit to be pasted, currently in the RFID unit waiting site, is separated and pasted onto the aluminum foil antenna 501 to be pasted on the carrier tape 500' (as shown in Fig. 4, onto the fold line coupling portions 2103, 5104 of the aluminum foil antenna). Then, the base tape 502' enters the next period T2 to convey at a variable speed. By repeating this process, the asynchronous labeling of the RFID units 502 is accomplished. In Fig. 9, tag modules formed by asynchronous labeling of the RFID units within a previous period T2 are indicated by 503.

To cover the PET protective film, the all-in-one machine further includes a fourth conveying mechanism, the fourth conveying mechanism including an unreeling unit 106, reeling units 107, 108, the circular PET film die cutter 52 and the drive shaft 51, as well as the electromagnetic inductor b. The circular PET film die cutter 52 is a circular die cutter manufactured according to the size of the PET protective film 504, with a spacing the same as the size of the die cutter for the aluminum foil antennas 501. The quantity of modules is calculated.

A combined tape 511' of the release liner and the PET release tape 511 with back glue is placed on the feeding unit 106 which is equipped with a tension controller 125'. The reeling unit 107 is configured to reel the release liner.

The conveying of the combined tape 511' is driven by the drive shaft 51. The PET release tape 511 with back glue enters between the drive shaft 51 and the circular PET film die cutter 52, to be cut by the circular PET film die cutter 52 to required PET protective films 504. Meanwhile, the PET protective films 504 are covered on the corresponding tag modules 503 on the carrier tape 500' to form semi-finished products 505. The PET, the scraps of which are discharged, is reeled onto the reeling unit 108.

The all-in-one machine further includes a fifth conveying mechanism and a sixth conveying mechanism, for the secondary asynchronous transferring of the semi-finished products 505 and the synchronous labeling of a surface liner.

The fifth conveying mechanism includes a shaft roller set 6, a drive shaft 71, a circular die cutter 72 disposed on an upper side of the drive shaft 71, an unreeling unit 121, a reeling unit 125, a guide shaft P4, and a photoelectric sensor F for accurately control the speed of a tape. The shaft roller set 6 includes a rubber roller 62 and a drive shaft 61, and an evasion groove, for the radio frequency ICs on the RFID units, is formed on the rubber roller 62.

As the product release liner 513 is a vacant region and no top-bottom alignment is required, this mechanism may be simplified as in Fig. 1. A second scrapper 9 is provided between a guide shaft P2 and a guide shaft P3 at an end of the first conveying mechanism.

The secondary asynchronous transferring process of the semi-finished products 505 is the same as the asynchronous pasting process of the units. The semi-finished products 505 on the carrier tape 500' are separated from the carrier tape 500' on the right edge of the scrapper 9 and fall off, due to the change in directions of the P2, the second scrapper 9 and the P3, and are pasted onto the product release liner 513 provided by the feeding unit 121.

According to the spacing of the customer's tag products and the conveying speed of the carrier tape 500' adhered with the semi-finished products 505, the speed of the product release liner 513 is controlled by a control motor, in order to transfer the semi-finished products 505 and enlarge the spacing therebetween.

Considering the number of defective products among the semi-finished products 505 or the rejection rate in the arrangement of the semi-finished products 505, photoelectric sensors D and E (the function of which is the same as the foregoing photoelectric sensors A and B) may be additionally provided to control one of the carrier tape 500' and the product release liner 513 to do the foregoing variable motion.

The sixth conveying mechanism includes an unreeling unit 122 equipped with a tension regulator 122', reeling units 123, 124, an electromagnetic inductor d, a photoelectrical sensor F, etc. The surface liner 512 with back glue, on which a pattern required by the customer is continuously printed, is placed on the release liner to form a surface liner roll 512'. The surface liner roll 512' is placed on the unreeling unit 122, and by tension control, the original release liner thereof is reeled by the reeling unit 123. The surface liner tape 512 with back glue enters the shaft roller set 6 to combine with the product release liner tape 513 with the semi-finished products 505, and is then die cut by the circular die cutter 72 to obtain the products 507. The waste is discharged by the reeling unit 124 and the final products 507 are reeled by the reeling unit 125.

According to the requirements of customers on the size and spacing of tags, a ratio of the linear velocity of the circular die cutter 72 to the linear velocity of the circular antenna die cutter 22 may be calculated, and this ratio is fed back to the PC or PLC by signals from the electromagnetic inductors d and a for differential compensation. Common requirements may be met. In order to achieve more accurate correction, a photoelectric sensor F is additionally provided, which may work with the foregoing electric eye to give feedback to the main control unit, in order to compensate the accurate alignment between the antenna modules and the surface liner and the precision of die cutting of the surface liner in real time.

## Claims

1. A method for manufacturing antenna RFID tags, comprising the following steps of:
S1: driving, by a first conveying mechanism, the conveying of a carrier tape (500') adhered with aluminum foil (500) at a speed V1, wherein the first conveying mechanism comprises a first shaft roller set (1), a first drive shaft (21), a circular antenna die cutter (22) disposed on an upper side of the first drive shaft (21), a second drive shaft (51) and a circular PET film die cutter (52) disposed on an upper side of the second drive shaft (51);
letting an adhesive tape (510) from a second conveying mechanism enter the first shaft roller set (1) to combine with the carrier tape (500') adhered with the aluminum foil, and die cutting by the circular antenna die cutter (22) to form aluminum foil antennas (501) on the carrier tape (500');
S2: driving, by a second shaft roller set (3) and a third shaft roller set (4) in a third conveying mechanism, the conveying of a base tape (502') with several RFID units (502) at a variable speed within a certain period, separating the RFID units from the base tape (502') when passing through a first flat scraper in front of the third shaft roller set (4), and pasting the RFID units onto the corresponding aluminum foil antennas (501) on the carrier tape (500') to form tag modules (503); and
S3: die cutting, by the circular PET film die cutter (52), a PET film (511) with back glue from a fourth conveying mechanism under the drive of the second drive shaft (51) to form PET films (504), and covering the PET films on the corresponding tag modules (503) on the carrier tape (500') to form semi-finished products (505).

2. The method according to claim 1, further comprising a step S4 of synchronously pasting a surface liner: driving, by a fourth shaft roller set (6) and a third drive shaft (71) in a fifth conveying mechanism, the conveying of a product release liner tape (513) at a speed V3, separating the semi-finished products (505) when the carrier tape (500') passes through a second flat scraper in front of a steering shaft P2, and pasting the semi-finished products (505) onto the product release liner tape (513), wherein a circular die cutter (72) is provided on an upper side of the third drive shaft (71); and
letting a surface liner tape (512) with back glue enter the fourth shaft roller set (6) to combine with the product release liner tape (513) adhered with the semi-finished products (505), and die cutting the surface liner (506) by the circular die cutter (72) to form products (507).

3. The method according to claim 1 or 2, wherein the period T2 of movement of the base tape (502') satisfies the following equation: T2 = L1/V1, where L1 is a skip distance between adjacent aluminum foil antennas (501) on the carrier tape (500'); T2 is divided into a rapid movement time T21, a waiting time T22 and a pasting time T23; within T21, the base tape (502') moves at a speed V21 to allow an RFID unit to be pasted to rapidly reach an RFID unit waiting site; within T22, the base tape (502') does not move, and instead waits for a paste instruction; when a next aluminum foil antenna (501) reaches a to-be-pasted antenna site, a main control unit sends a paste instruction; within T23, the base tape (502') and the carrier tape (500') move at the same speed V1, so that the RFID unit to be pasted, currently in the RFID unit waiting site, is separated and pasted onto the aluminum foil antenna (501).

4. The method according to one of the preceding claims, wherein the thickness of the aluminum foil adhered onto the carrier tape (500') is 0.015 mm to 0.050 mm.

5. The method according to one of the preceding claims, wherein each of the aluminum foil antennas (501) comprises a folded dipole with a coupling portion; each of the RFID units (502) comprises a base film, a radiating antenna disposed on the base film and a radio frequency IC; and, the RFID units are pasted onto the coupling portions of the aluminum foil antennas (501).

6. The method according to one of the preceding claims, wherein the carrier tape (500') is a release PET tape, and the base tape (502') is a release liner tape.

7. An all-in-one machine for manufacturing a antenna RFID tag, comprising a rack and a main control unit, wherein the all-in-one machine further comprises:
a first conveying mechanism, comprising: a first shaft roller set (1) having a rubber roller (12) and a fourth drive shaft (11), a first drive shaft (21), a circular antenna die cutter (22) disposed on an upper side of the first drive shaft (21), a second drive shaft (51), and a circular PET film die cutter (52) disposed on an upper side of the second drive shaft (51), the first conveying mechanism being configured to convey a carrier tape (500') adhered with aluminum foil and form aluminum foil antennas (501) on the carrier tape (500') by die cutting by the circular antenna die cutter (22);
a second conveying mechanism having an unreeling means (102) and a reeling means (103) and configured to convey an adhesive tape along with which wasted aluminum foil portions, caused by die cutting the aluminum foil antennas (501), may be discharged; and
a third conveying mechanism, comprising: a second shaft roller set (3) having two rubber rollers (33, 32) and a fifth drive shaft (31), a third shaft roller set (4) having two rubber press rollers (43, 42) and a sixth drive shaft (41), and a first flat scraper in front of the third shaft roller set (4), the fifth drive shaft (31) and the sixth drive shaft (41) being successively disposed between the first drive shaft (21) and the second drive shaft (51), the third conveying mechanism being configured to convey a base tape (502') carried with several RFID units (502), the first flat scraper allowing the RFID units (502) to separate from the base tape (502') and then to be pasted onto the corresponding aluminum foil antennas (501) on the carrier tape (500') to form tag modules (503);
the drive shafts (11, 21, 51, 31, 41) are equipped with electromagnetic inductors for speed measurement, and each drive shaft is controlled respectively by a motor; and the electromagnetic inductors are each connected to a corresponding input end of the main control unit via an interface circuit, to be monitored, speed regulated and synchronization rectified by the main control unit.

8. The all-in-one machine according to claim 7, further comprising a fourth conveying mechanism, the fourth conveying mechanism comprising an unreeling unit (106), reeling units (107, 108), the circular PET film die cutter (52) and the second drive shaft (51); the conveyed PET film (511) with back glue is die cut by the circular PET film die cutter (52) to form PET films (504); and the PET films are covered on the corresponding tag modules (503) on the carrier tape (500') to form semi-finished products (505).

9. The all-in-one machine according to claim 7 or 8, further comprising a fifth conveying mechanism and a sixth conveying mechanism;
the fifth conveying mechanism comprises a fourth shaft roller set (6), a third drive shaft (71), a circular die cutter (72) disposed on an upper side of the third drive shaft (71), an unreeling unit (121) and a reeling unit (125); and the fifth conveying mechanism is configured to drive the conveying of a product release liner tape (513), separate the semi-finished products (505) when the carrier tape (500') passes through a second flat scraper (9) in front of the steering shaft P2, and paste the semi-finished products onto the product release liner tape (513);
the sixth conveying mechanism comprises an unreeling unit (122) and reeling units (123, 124), and configured to convey a surface liner tape (512) with back glue into the fourth shaft roller set (6) to combine with the product release liner tape (513) of the semi-finished products (505), and to die cut the surface liner tape by the circular die cutter (72) to form products (507).

10. The all-in-one machine according to one of claims 7 to 9, wherein the rubber press rollers (42, 43) are provided with evasion grooves for the radio frequency ICs on the RFID units.

## Patentansprüche

1. Ein Verfahren zur Herstellung von Antennen-RFID-Etiketten, das die folgenden Schritte umfasst:
S1: Antreiben des Förderns eines Trägerbands (500') durch einen ersten Fördermechanismus, das mit Aluminiumfolie (500) beklebt ist in einer Geschwindigkeit V1, wobei der erste Fördermechanismus einen ersten Wellenrollensatz (1), eine erste Antriebswelle (21), eine Umlaufantennenstanze (22), die auf einer oberen Seite der zweiten Antriebswelle (21) angeordnet ist, eine zweite Antriebswelle (51) und eine Umlauf-PET-Folienstanze (52), die auf einer oberen Seite der zweiten Antriebswelle (51) angeordnet ist, umfasst;
Eintreten lassen eines Klebebands (510) von einem zweiten Fördermechanismus in den Wellenrollensatz (1), um sich mit dem Trägerband (500'), das mit der Aluminiumfolie verklebt ist, zu verbinden und Stanzen durch die Umlaufantennenstanze (22), um Aluminiumfolienantennen (501) auf dem Trägerband (500') zu bilden;
S2: Antreiben durch einen zweiten Wellenrollensatz (3) und einen dritten Wellenrollensatz (4) in einem dritten Fördermechanismus des Förderns eines Basisbands (502') mit mehreren RFID-Einheiten (502) mit einer variablen Geschwindigkeit innerhalb einer gewissen Zeitspanne, wobei die RFID-Einheiten von dem Basisband (502') abgetrennt werden, wenn sie einen ersten Flachschaber vor dem Wellenrollensatz (4) passieren und Aufkleben der RFID-Einheiten auf die entsprechenden Aluminiumfolienantennen (501) auf dem Trägerband (500'), um Etikettenmodule (503) zu bilden; und
S3: Stanzen einer PET-Folie (511) mit Rückseitenklebstoff von einem vierten Fördermechanismus unter dem Antrieb der fünften Antriebswelle (51) durch die Umlauf-PET-Folien-Stanze (52), um PET-Folien (504) zu bilden und um die PET-Folien auf den entsprechenden Etikettenmodulen (503) auf dem Förderband (500') abzudecken, um halbfertige Produkte (505) anzufertigen.

2. Das Verfahren gemäß Anspruch 1, ferner umfassend einen Schritt S4 des synchronen Anbringens einer Oberflächenummantelung: Antreiben durch einen vierten Wellenrollensatz (6) und einer dritten Antriebswelle (71) in einem fünften Fördermechanismus des Förderns eines Produktfreigabeaußenbands (513) mit einer Geschwindigkeit V3, Trennen der halbfertigen Produkte (505), wenn das Trägerband (500') einen zweiten Flachschaber vor der Steuerungswelle P2 passiert und Einkleben der halbfertigen Produkte (505) auf dem Produktfreigabeaußenband (513), wobei eine Umlaufstanze (72) auf einer oberen Seite der siebten Antriebswelle (71) vorgesehen ist; und
Eintreten lassen eines Oberflächenaußenbands (512) mit Rückseitenklebstoff in den vierten Wellenrollensatz (6), um sich mit dem Produktfreigabeaußenband (513), das mit den halbfertigen Produkten (505) verklebt ist, zu verbinden und Stanzen der Oberflächenummantelung (506) durch die Umlaufstanze (72), um Produkte (507) zu bilden.

3. Das Verfahren gemäß Anspruch 1 oder 2, wobei die Zeitspanne T2 einer Bewegung des Basisbands (502') die folgende Gleichung erfüllt: T2=L1/V1, wobei L1 ein Sprungabstand zwischen aneinandergrenzenden Aluminiumfolienantennen (501) auf dem Förderband (500') ist; T2 ist aufgeteilt in eine Eilgang-Zeit T21, eine Wartezeit T22 und eine Einklebezeit T23; wobei sich das Basisband (502') mit einer Geschwindigkeit V21 innerhalb T21 bewegt (502'), um es einer einzuklebenden RFID-Einheit zu ermöglichen schnell eine RFID-Einheit-Wartestation zu erreichen; wobei sich innerhalb T22 das Basisband (502') nicht bewegt, sondern stattdessen auf eine Einklebeanweisung wartet; wenn eine nächste Aluminiumfolienantenne (501) eine Einklebe-Antennenstation erreicht, sendet eine Hauptsteuereinheit eine Einklebeanweisung; wobei sich innerhalb T23 das Basisband (502') und das Trägerband (500') in derselben Geschwindigkeit V1 bewegen, so dass die einzuklebende RFID-Einheit, die sich gerade in der RFID Wartestation befindet, getrennt wird und auf die Aluminiumfolienantenne (501) aufgeklebt wird.

4. Das Verfahren gemäß einem der vorangehenden Ansprüche, wobei die Dicke der Aluminiumfolie, die auf das Trägerband (500') aufgeklebt ist, zwischen 0,015 mm und 0,050 mm beträgt.

5. Das Verfahren gemäß einem der vorangehenden Ansprüche, wobei jede der Aluminiumfolienantennen (501) ein Faltdipol mit einem Verbindungsabschnitt umfasst; wobei jede der RFID-Einheiten (502) eine Basisfolie, eine ausstrahlende Antenne, die auf der Basisfolie angeordnet ist und eine integrierte Funkfrequenzschaltung umfasst; und die RFID-Einheiten auf die Verbindungsabschnitte der Aluminiumfolienantennen (501) aufgeklebt sind.

6. Das Verfahren gemäß einem der vorangehenden Ansprüche, wobei das Trägerband (500') ein Freigabe-PET-Band und das Basisband (502') ein Freigabe-Stoßband ist.

7. Eine Komplettmaschine zur Herstellung von Antennen-RFID-Etiketten, mit einem Gestell und einer Hauptkontrolleinheit, wobei die Komplettmaschine ferner umfasst:
einen ersten Fördermechanismus umfassend: einen ersten Wellenrollensatz (1) mit einer Gummirolle (12) und einer vierten Antriebswelle (11), einer ersten Antriebswelle (21), einer Umlaufantennenstanze (22), die auf einer oberen Seite der ersten Antriebswelle (21) angeordnet ist, einer zweiten Antriebswelle (51) und einer Umlauf-PET-Folienstanze (52), die auf einer oberen Seite der zweiten Antriebswelle (51) angeordnet ist, wobei der erste Fördermechanismus konfiguriert ist, um ein Trägerband (500'), das mit Aluminiumfolie verklebt ist zu fördern und Aluminiumfolienantennen (501) auf dem Trägerband (500') durch das Stanzen der Umlaufantennenstanze (22) zu bilden;
einen zweiten Fördermechanismus, der einen Abspuler (102) und einen Aufspuler (103) umfasst und konfiguriert ist, um ein Klebeband zu fördern, mit dem Abfallaluminumfolienabschnitte entsorgt werden können, die durch Ausstanzen der Aluminumfolienantennen (501) anfallen; und
einen dritten Fördermechanismus umfassend: einen zweiten Wellenrollensatz (3) mit zwei Gummirollen (33, 32) und einer fünften Antriebswelle (31), einen dritten Wellenrollensatz (4) mit zwei Gummipressrollen (43, 42) und einer sechsten Antriebswelle (41), und einem ersten Flachschaber vor dem dritten Wellenrollensatz (4), wobei die fünfte Antriebswelle (31) und die sechste Antriebswelle (41) hintereinander zwischen der ersten Antriebswelle (21) und der zweiten Antriebswelle (51) angeordnet sind, wobei der dritte Fördermechanismus konfiguriert ist, um ein Basisband (502') mit mehreren RFID-Einheiten (502) zu fördern, wobei die RFID-Einheiten (502) durch den ersten Flachschaber von dem Basisband (502') abgetrennt und dann auf die entsprechenden Aluminiumfolienantennen (501) auf dem Trägerband (500') aufgeklebt werden, um Etikettenmodule (503) zu bilden;
die Antriebswellen (11, 21, 31, 41, 51) mit elektromagnetischen Induktivitäten zum Geschwindigkeitsmessen ausgestattet sind und jede Antriebswelle entsprechend durch einen Motor gesteuert wird; und wobei die elektromagnetischen Induktivitäten jeweils mit einem entsprechenden Eingabeanschluss der Hauptsteuereinheit über einen Schnittstellenstromkreis verbunden sind, um durch die Hauptsteuereinheit überwacht, in der Geschwindigkeit reguliert und in der Synchronisation verbessert zu werden.

8. Die Komplettmaschine gemäß Anspruch 7, ferner mit einem vierten Fördermechanismus, wobei der vierte Fördermechanismus eine Abspuleinheit (106), Aufspuleinheiten (107, 108), die Umlauf-PET-Folienstanze (52) und die zweite Antriebswelle (51) umfasst; wobei die geförderte PET-Folie (511) mit Rückseitenklebung durch die Umlauf-PET-Folienstanze (52) ausgestanzt wird, um PET-Folien (504) zu bilden; und wobei die PET-Folien auf den entsprechenden Etikettenmodulen (503) auf dem Trägerband (500') abgedeckt werden, um halbfertige Produkte (505) zu bilden.

9. Die Komplettmaschine gemäß Anspruch 7 oder 8, ferner mit einem fünften Fördermechanismus und einem sechsten Fördermechanismus;
wobei der fünfte Fördermechanismus einen vierten Wellenrollensatz (6), eine dritte Antriebswelle (71) eine Umlaufstanze (72), die auf einer oberen Seite der siebten Antriebswelle (71) angeordnet ist, eine Abspuleinheit (121) und eine Aufspuleinheit (125) umfasst; und wobei der fünfte Fördermechanismus konfiguriert ist, um die Förderung eines Produktfreigabeaußenbands (513) anzutreiben, die halbfertigen Produkte (505) zu trennen, wenn das Trägerband (500') durch einen zweiten Flachschaber (9) vor der Steuerwelle P2 läuft und die halbfertigen Produkte auf das Produktfreigabeaußenband (513) aufzukleben;
wobei der sechste Fördermechanismus eine Abspuleinheit (122) und Aufspuleinheiten (123, 124) umfasst und konfiguriert ist, um ein Oberflächenummantelungsband (512) mit Rückseitenklebung in den vierten Wellenrollensatz (6) zu fördern,
um es mit dem Produktfreigabeaußenband (513) der halbfertigen Produkte (505) zu verbinden und um das Oberflächenummantelungsband durch die Umlaufstanze (72) auszustanzen, um Produkte zu bilden.

10. Die Komplettmaschine gemäß einem der Ansprüche 7 bis 9, wobei die Gummipressrollen (42, 43) mit Ausweichrillen für die integrierte Funkfrequenzschaltung auf den RFID-Einheiten ausgestattet sind.

## Revendications

1. Procédé de fabrication d'étiquettes RFID d'antenne, comprenant les étapes suivantes :
S1 : l'entraînement, par un premier mécanisme de transport, le transport d'un tapis de transport (500') fixé à un déflecteur en aluminium (500) à une vitesse V1, dans lequel le premier mécanisme de transport comprend un premier jeu de rouleaux d'arbre (1), un premier arbre d'entraînement (21), un emporte-pièce d'antenne circulaire (22) disposé sur un côté supérieur du premier arbre d'entraînement (21), un second arbre d'entraînement (51) et un emporte-pièce de film PET circulaire (52) disposé sur un côté supérieur du second arbre d'entraînement (51) ;
l'admission d'une bande adhésive (510) provenant d'un second mécanisme de transport dans le premier jeu de rouleaux d'arbre (1) à combiner au tapis de transport (500') fixé au déflecteur en aluminium, et la découpe à l'emporte-pièce par l'emporte-pièce d'antenne circulaire (22) pour former les antennes de déflecteur en aluminium (501) sur le tapis de transport (500') ;
S2 : l'entraînement, par un second jeu de rouleaux d'arbre (3) et un troisième jeu de rouleaux d'arbre (4) dans un troisième mécanisme de transport, le transport d'une bande de base (502') avec plusieurs unités RFID (502) à une vitesse variable pendant une certaine période, la séparation des unités RFID par rapport à la bande de base (502') lors de traversée d'un premier racleur plat devant le troisième jeu de rouleaux d'arbre (4) et le collage des unités RFID sur les antennes de déflecteur en aluminium (501) correspondantes sur le tapis de transport (500') pour former des modules d'étiquette (503) ; et
S3 : la découpe à l'emporte-pièce, par l'emporte-pièce de film PET circulaire (52), d'un film PET (511) avec le collage arrière à partir d'un quatrième mécanisme de transport sous l'entraînement du second arbre d'entraînement (51) pour former des films PET (504) et le recouvrement des films PET sur les modules d'étiquette (503) correspondants sur le tapis de transport (500') pour former des produits semi-finis (505).

2. Procédé selon la revendication 1, comprenant en outre une étape S4 de collage synchrone d'un revêtement de surface : l'entraînement, par un quatrième jeu de rouleaux d'arbre (6) et un troisième arbre d'entraînement (71) dans un cinquième mécanisme de transport, le transport d'un bande de revêtement de libération de produit (513) à une vitesse V3, la séparation des produits semi-finis (505) lorsque le tapis de transport (500') traverse un second racleur plat devant un arbre de direction P2 et le collage des produits semi-finis (505) sur la bande de revêtement de libération de produit (513), dans lequel un emporte-pièce (72) circulaire est prévu sur un côté supérieur du troisième arbre d'entraînement (71) ; et
Admission d'une bande de revêtement de surface (512) avec collage arrière dans le quatrième jeu de rouleaux d'arbre (6) pour la combiner avec la bande de revêtement de libération de produit (513) fixée avec les produits semi-finis (505) et la découpe à l'emporte-pièce du revêtement de surface (506) par l'emporte-pièce (72) circulaire pour former les produits (507).

3. Procédé selon la revendication 1 ou 2, dans lequel la période T2 de mouvement de la bande de base (502') admet l'équation suivante : T2 = L1/V1, où L1 est une distance de saut entre les antennes de déflecteur en aluminium (501) adjacentes sur le tapis de transport (500') ; la période T2 est divisée en un temps de mouvement rapide T21, un temps d'attente T22 et un temps de collage T23 ; pendant la période T21, la bande de base (502') se déplace à une vitesse V21 pour permettre de coller une unité RFID de façon à atteindre rapidement un site d'attente d'unité RFID ; pendant la période T22, la bande de base (502') ne se déplace pas et attend une instruction de collage ; lorsqu'une antenne de déflecteur en aluminium (501) suivante atteint un site d'antenne à coller, une unité de commande principale envoie une instruction de collage ; pendant la période T23, la bande de base (502') et le tapis de transport (500') se déplacent à la même vitesse V1, de sorte que l'unité RFID à coller, actuellement dans le site d'attente d'unité RFID, est séparée et collée sur l'antenne de déflecteur en aluminium (501).

4. Procédé selon l'une quelconque des revendications précédentes, dans lequel l'épaisseur du déflecteur en aluminium fixé sur le tapis de transport (500') est de 0,015 mm à 0,050 mm.

5. Procédé selon l'une quelconque des revendications précédentes, dans lequel chacune des antennes de déflecteur en aluminium (501) comprend un dipôle plié avec une partie de couplage ; chacune des unités RFID (502) comprend un film de base, une antenne rayonnante disposée sur le film de base et un circuit intégré IC de radiofréquence ; et les unités RFID sont collées sur les parties de couplage des antennes de déflecteur en aluminium (501).

6. Procédé selon l'une quelconque des revendications précédentes, dans lequel le tapis de transport (500') est une bande en PET antiadhésive et la bande de base (502') est une bande de revêtement antiadhésive.

7. Machine tout-en-un pour fabriquer une étiquette RFID d'antenne, comprenant un râtelier et une unité de commande principale, dans lequel la machine tout-en-un comprend en outre :
un premier mécanisme de transport, comprenant : un premier jeu de rouleaux d'arbre (1) ayant un rouleau en caoutchouc (12) et un quatrième arbre d'entraînement (11), un premier arbre d'entraînement (21), un emporte-pièce (22) d'antenne circulaire disposé sur un côté supérieur du premier arbre d'entraînement (21), un second arbre d'entraînement (51), et un emporte-pièce (52) de film PET circulaire disposé sur un côté supérieur du second arbre d'entraînement (51), le premier mécanisme de transport étant configuré pour transporter un tapis de transport (500') fixé à un déflecteur en aluminium et former les antennes de déflecteur en aluminium (501) sur le tapis de transport (500') par découpe à l'emporte-pièce avec l'emporte-pièce d'antenne circulaire (22) ;
un second mécanisme de transport ayant un moyen de déroulement (102) et un moyen d'enroulement (103) et configuré pour transporter une bande adhésive avec laquelle les parties de déflecteur en aluminium perdues, à cause de la découpe à l'emporte-pièce des antennes de déflecteur en aluminium (501), peuvent être déchargées ; et
un troisième mécanisme de transport, comprenant : un second jeu de rouleaux d'arbre (3) ayant deux rouleaux en caoutchouc (33, 32) et un cinquième arbre d'entraînement (31), un troisième jeu de rouleaux d'arbre (4) ayant deux rouleaux de presse en caoutchouc (43, 42) et un sixième arbre d'entraînement (41), et un premier racleur plat devant le troisième jeu de rouleaux d'arbre (4), le cinquième arbre d'entraînement (31) et le sixième arbre d'entraînement (41) étant successivement disposés entre le premier arbre d'entraînement (21) et le second arbre d'entraînement (51), le troisième mécanisme de transport étant configuré pour transporter une bande de base (502') transportée avec plusieurs unités RFID (502), le premier racleur plat permettant aux unités RFID (502) de se séparer de la bande de base (502') avant d'être collées sur les antennes de déflecteur en aluminium (501) correspondantes sur le tapis de transport (500') pour former les modules d'étiquette (503) ;
les arbres d'entraînement (11, 21, 51, 31, 41) sont équipés de bobines d'induction électromagnétiques pour mesurer la vitesse et chaque arbre d'entraînement est commandé respectivement par un moteur ; et les bobines d'induction électromagnétiques sont chacune reliées à l'extrémité d'entrée correspondante de l'unité de commande principale via un circuit d'interface, pour surveillance, régulation de vitesse et rectification de synchronisation par l'unité de commande principale.

8. Machine tout-en-un selon la revendication 7, comprenant en outre un quatrième mécanisme de transport, le quatrième mécanisme de transport comprenant une unité de déroulement (106), les unités d'enroulement (107, 108), l'emporte-pièce (52) de film PET circulaire et le second arbre d'entraînement (51); le film PET (511) transporté avec collage arrière est découpé à l'emporte-pièce par l'emporte-pièce de film PET circulaire (52) pour former les films PET (504) ; et les films PET sont recouverts sur les modules d'étiquette (503) correspondants sur le tapis de transport (500') pour former les produits semi-finis (505).

9. Machine tout-en-un selon la revendication 7 ou 8, comprenant en outre un cinquième mécanisme de transport et un sixième mécanisme de transport ;
le cinquième mécanisme de transport comprend un jeu de rouleaux d'arbre (6), un troisième arbre d'entraînement (71), un emporte-pièce (72) circulaire disposé sur un côté supérieur du troisième arbre d'entraînement (71), une unité de déroulement (121) et une unité d'enroulement (125) ; et le cinquième mécanisme de transport est configuré pour entraîner le transport d'une bande de revêtement de libération de produit (513), séparer les produits semi-finis (505) lorsque le tapis de transport (500') traverse un second racleur plat (9) devant l'arbre de direction P2 et coller les produits semi-finis sur la bande de revêtement de libération de produit (513) ;
le sixième mécanisme de transport comprend une unité de déroulement (122) et des unités de déroulement (123, 124), et est configuré pour transporter une bande de revêtement de surface (512) avec collage arrière dans le jeu de rouleaux d'arbre (6) pour le combiner avec la bande de revêtement de libération de produit (513) des produits semi-finis (505), et pour découper à l'emporte-pièce la bande de revêtement de surface avec l'emporte-pièce (72) circulaire pour former les produits (507).

10. Machine tout-en-un selon l'une quelconque des revendications 7 à 9, dans laquelle les rouleaux de presse en caoutchouc (42, 43) sont pourvus de rainures de passage pour les circuits intégrés IC de radiofréquence sur les unités RFID.
